# EUROPÄISCHE PATENTSCHRIFT

(11) **EP 3 062 111 B1**
(45) Veröffentlichungstag und Bekanntmachung des Hinweises auf die Patenterteilung: **11.10.2017**
(21) Anmeldenummer: 16150172.1
(22) Anmeldetag: 05.01.2016
(51) Int. Cl.: G01P 1/02, G01P 13/00, G08B 13/19

(54) **VORRICHTUNG ZUR ERKENNUNG DER PRÄSENZ ODER BEWEGUNG VON PERSONEN**
DEVICE FOR DETECTING THE PRESENCE OR MOVEMENT OF PERSONS
DISPOSITIF POUR DÉTECTER LA PRÉSENCE OU LE MOUVEMENT DE PERSONNES

(30) Priorität: 25.02.2015 DE 102015102645
(43) Veröffentlichungstag der Anmeldung: 31.08.2016
(73) Patentinhaber: Insta GmbH, 58509 Lüdenscheid (DE)
(72) Erfinder: Kannapinn, Jörg, 59174 Kamen (DE); Voigtländer, Andreas, 58509 Lüdenscheid (DE)

(56) Entgegenhaltungen:
- EP-A1- 0 571 052
- DE-A1- 3 540 680
- DE-B3-102005 015 748
- DE-C1- 19 639 318
- DE-U1-202010 003 744
- US-A1- 2007 241 896

## Beschreibung

Die vorliegende Erfindung geht von einem gemäß Oberbegriff des unabhängigen Anspruchs konzipierten Melder zur Erkennung der Präsenz und/oder Bewegung von sich im Erfassungsbereich befindlichen Personen aus.

Derartige Melder sind in der Regel dafür vorgesehen, innerhalb und/oder außerhalb von Gebäuden auf automatische Art und Weise Aktoren beziehungsweise Verbraucher, wie zum Beispiel eine zugeordnete Beleuchtungseinrichtung, Jalousien, Gebäudeheizungen und so weiter bedarfsgerecht zu beeinflussen. Viele solcher Melder weisen jedoch einen aufwendigen, vergleichsweise hohe Kosten verursachenden Aufbau auf, um bedarfsgerecht einen großen Erfassungsbereich zur Verfügung zu stellen, in dem die sich darin befindlichen Personen sicher erkannt werden. Oftmals sind derartige Melder mit Stelleinrichtungen versehen, um dem Benutzer eine individuelle Einstellung von Beeinflüssungsparametern, wie zum Beispiel Empfindlichkeit, Nachlaufzeit, Schaltschwellen und/oder für die Inbetriebnahme als Busgerät in einem Gebäudeinstallationssystem zu ermöglichen. Oftmals sind die zur Betätigung der Stelleinrichtungen notwendigen Betätigungselemente für den Benutzer nur umständlich zu erreichen beziehungsweise zu bedienen und/oder treten unschön, das Design des Melders störend, in Erscheinung.

Durch die DE 35 40 680 A1 ist ein dem Oberbegriff des unabhängigen Anspruchs entsprechender Melder bekannt geworden. Ein solcher Melder ist zur Erkennung der Präsenz und/oder Bewegung von sich im Erfassungsbereich aufhaltenden Personen vorgesehen und weist ein Gehäuse auf, welches zur Aufnahme einer Leiterplattenanordnung vorgesehen ist. Die Leiterplattenanordnung ist mit einer, zumindest ein erstes Sensorelement aufweisenden Sensoranordnung zur Erfassung von Infrarotstrahlung und mit einer zumindest ein zweites Sensorelement aufweisenden Sensoreinrichtung, zur Erfassung der Umgebungshelligkeit und mit zumindest einer von außen durch einen Benutzer beeinflussbaren Stelleinrichtungen sowie mit zumindest einem Microcontroller und weiteren zur Funktion notwendigen Bauteilen bestückt. Am Gehäuse dieses Melders ist, wie üblich, eine mehrere Linsensegmente aufweisende Linsenkappe festgelegt, wobei das Gehäuse aus einem Gehäuseunterteil und einem mit der Linsenkappe versehenen Gehäuseoberteil besteht, und wobei aus dem Gehäuseoberteil einerseits zumindest ein andererseits mit der zumindest einen Stelleinrichtung in Wirkverbindung stehendes Betätigungselement nach außen geführt ist, dessen Zugang für den Benutzer durch einen wiederlösbar am Gehäuseoberteil festlegbaren Designring abdeckbar ist.

Des Weiteren ist durch die DE 10 2005 015 748 B3 ist ein Melder bekannt geworden. Ein solcher Melder ist zur Erkennung der Präsenz und/oder Bewegung von sich im Erfassungsbereich aufhaltenden Personen vorgesehen und weist ein Gehäuse auf, welches zur Aufnahme einer Leiterplattenanordnung vorgesehen ist. Die Leiterplattenanordnung ist mit einer, mehrere erste Sensorelemente aufweisenden Sensoranordnung zur Erfassung von Infrarotstrahlung und mit einer zumindest ein zweites Sensorelement aufweisenden Sensoreinrichtung, zur Erfassung der Umgebungshelligkeit und mit mehreren von außen durch einen Benutzer beeinflussbaren Stelleinrichtungen sowie mit zumindest einem Microcontroller und weiteren zur Funktion notwendigen Bauteilen bestückt.

Am Gehäuse dieses Melders ist, wie üblich, eine mehrere Linsensegmente aufweisende Linsenkappe festgelegt.

Zudem ist durch die DE 20 2010 003 744 U1 eine wasserbeständige Sensorvorrichtung bekannt geworden, welche eine Halterung und einen hinteren Deckel aufweist, wobei der Deckel wahlweise drehbar in der Halterung gelagert ist und eine Seitenwand zur Ausbildung eines Aufnahmeraumes vorgesehen ist. Das Sensormodul befindet sich innerhalb des Aufnahmeraumes. Zudem ist eine Linse vorgesehen, die an einer Endkante der Seitenwand des hinteren Deckels anliegt und somit den Aufnahmeraum verschließt, wobei zwischen der Linse und der Endkante der Seitenwand eine Wasserabdichtung vorgesehen ist.

Außerdem ist durch die US 2007/0241896 A1 ein Infrarot-Sensorschalter bekannt geworden. Dieser Sensorschalter umfasst einen Infrarotsensor mit einem Erfassungsbereich und einen Controller, um festzustellen, ob sich eine Person im Erfassungsbereich befindet oder nicht, wobei auf Basis dieser Erkenntnisse das Ein- und Ausschalten eines Verbrauchers gesteuert wird. Der Sensorschalter umfasst weiterhin einen Sensorblock mit dem Sensor und ein Gehäuse, welches zum Wandeinbau vorgesehen ist.

Des Weiteren ist durch die DE 196 39 318 C1 ein Mehrfach-Passiv-Infrarot-Bewegungsmelder bekannt geworden. Der Mehrfach-Passiv-Infrarot-Bewegungsmelder teilt einen zu überwachenden Raum durch das spezielle Optik- und Abschottungssystem individuell in verschiedene Erfassungsbezirke für mindestens zwei verschiedene Passiv-Infrarot-Bewegungsmelder auf. Diese Erfassungsbezirke dürfen sich für eine spätere logische Auswertung keinesfalls überschneiden, da es anderenfalls zu nicht verwertbaren Doppelsignalen kommt. Zur Lösung sind mindestens zwei voneinander unabhängige Passiv-Infrarot-Bewegungsmelder dicht untereinander in einem gemeinsamen Gehäuse vereinigt. Die mindestens zwei Meldersignale werden auf eine gemeinsame Auswertlogik geschaltet. Die Fresneloptik ist so ausgestaltet, dass jeder Punkt im Überwachungsbereich von jedem Melder separat mit gleichem Segmenttyp detektiert wird. Um den Passiv-Infrarot-Bewegungsmelder sind in bestimmten Gradschritten spezielle verschiebbare Abschottungslamellen angeordnet, die bei ihrem Verschieben einen Teil der Segmente des einen Melders öffnen und gleichzeitig die Segmente des gleichen Typs des anderen Melders verschließen. Der erfindungsgemäße Passiv-Infrarot-Bewegungsmelder kann beispielsweise zur Außenhautsicherung in Einbruchmeldesystemen oder zur zuverlässigen Präsenzmeldung von Personen eingesetzt werden. Ausgehend von einem solchen Melder liegt der vorliegenden Erfindung die Aufgabe zugrunde, einen Melder zu schaffen, welcher nicht nur einfacherer aufgebaut ist, sondern bei dem auch die Bedienbarkeit verbessert ist.

Erfindungsgemäß wird diese Aufgabe durch einen Melder mit den Merkmalen des Anspruchs 1 gelöst. Bei einer solchen Ausbildung ist besonders vorteilhaft, dass bei vergleichsweise kompaktem Aufbau ein großer Erfassungsbereich bei sicherem Erkennungsverhalten abgedeckt wird. Außerdem ist besonders vorteilhaft, dass dieser Melder baukastenartig sowohl für die direkte Montage in Zwischendecken als auch für eine Montage in Installationsdosen verwendet werden kann. Dabei können vorteilhafterweise Installationsdosen Verwendung finden, die zum Beispiel als Unterputzdosen, als Hohlwanddosen oder als Aufputzdosen ausgeführt sind. In allen Anwendungsfällen sorgt vorteilhafterweise ein, wiederlösbar am Gehäuseoberteil festlegbarer Designring für einen formschönen Abschluss des Melders.

Weitere vorteilhafte Ausgestaltungen des erfindungsgemäßen Gegenstandes sind in den abhängigen Ansprüchen angegeben. Anhand mehrerer Ausführungsbeispiele sei die Erfindung im Prinzip näher erläutert. Dabei zeigen:

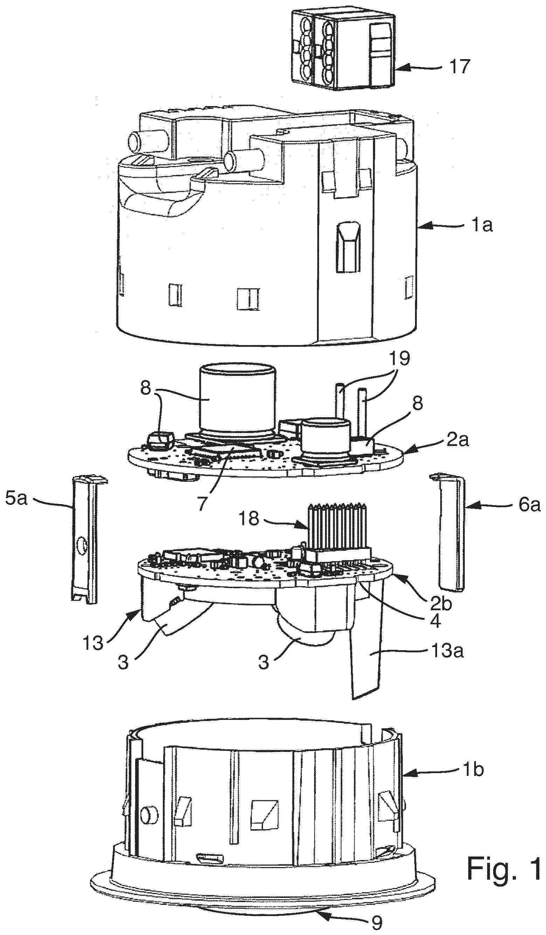

- Fig. 1:: prinziphaft eine Explosionsdarstellung eines derartigen Melders, in räumlicher Darstellung;
- Fig. 2:: prinziphaft einen gemäß Figur 1 ausgeführten Melder, vorgesehen zur direkten Montage in eine Zwischendecke, im Zusammenbau, mit zwei zugeordneten Federbügeln und einem zugeordneten Designring;
- Fig.3:: prinziphaft einen gemäß Figur 1 ausgeführten Melder, vorgesehen zur Montage in eine Installationsdose, im Zusammenbau, mit zwei zugeordneten Federlaschen, einem Montagering und einem zugeordneten Designring;

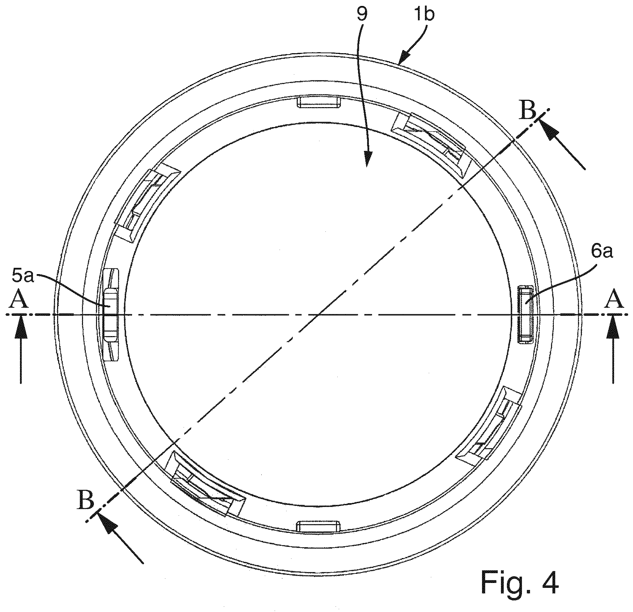

- Fig. 4:: prinziphaft einen gemäß Figur 1 ausgeführten Melder, in der Draufsicht, ohne Designring;

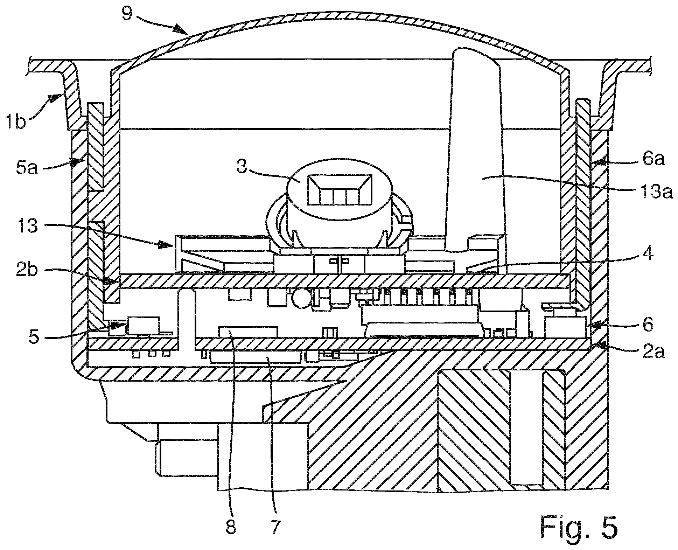

- Fig.5:: prinziphaft einen gemäß Figur 1 ausgeführten Melder, im Vollschnitt, entsprechend Linie A-A gemäß Figur 4;

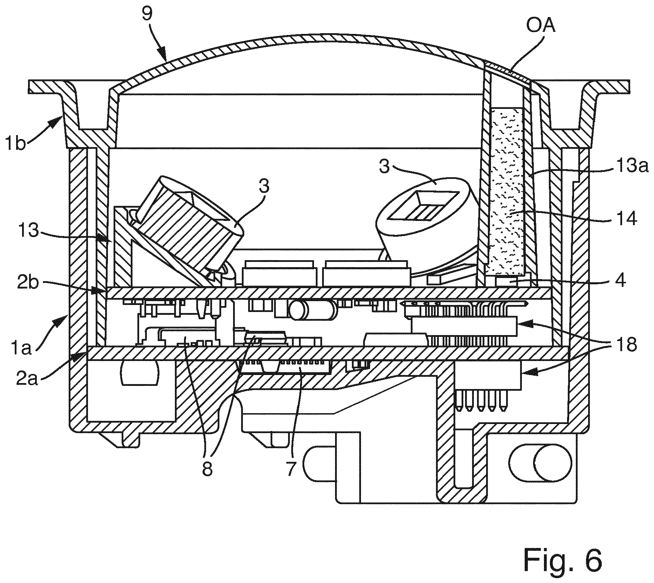

- Fig.6:: prinziphaft einen gemäß Figur 1 ausgeführten Melder, im Vollschnitt, entsprechend Linie B-B gemäß Figur 4.

Wie aus den Figuren hervorgeht, besteht ein solcher zur Erkennung der Präsenz und/oder Bewegung von sich im Erfassungsbereich aufhaltenden Personen vorgesehener Melder im Wesentlichen aus einem Gehäuse, welches zur Aufnahme einer Leiterplattenanordnung vorgesehen ist. Die Leiterplattenanordnung ist mit einer, drei erste Sensorelemente 3 aufweisenden Sensoranordnung zur Erfassung von Infrarotstrahlung und mit einer, ein zweites Sensorelement 4 aufweisenden Sensoreinrichtung zur Erfassung der Umgebungshelligkeit bestückt. Außerdem ist die Leiterplattenanordnung mit mehreren von außen durch einen Benutzer beeinflussbaren Stelleinrichtungen 5,6 sowie einem Microcontroller 7 und weiteren zur Funktion notwendigen Bauteilen 8 bestückt. Am Gehäuse ist eine mehrere Linsensegmente aufweisende Linsenkappe 9 vorhanden. Das Gehäuse besteht aus einem Gehäuseunterteil 1a und einem, einstückig mit der Linsenkappe 9 versehenen Gehäuseoberteil 1b. Aus dem Gehäuseoberteil 1b sind einerseits zwei Betätigungselemente 5a, 6a nach außen geführt, die andererseits jeweils mit einer Stelleinrichtung 5,6 in Wirkverbindung stehen. Die einerseits nach außen geführten Betätigungselemente 5a, 6a bieten somit einen komfortablen Zugang für den Benutzer, der durch einen, wiederlösbar am Gehäuseoberteil 1b festlegbaren Designring 10 abdeckbar beziehungsweise wieder verschließbar ist. Bei montiertem Designring 10 sind die Betätigungselemente 5a, 6a also verdeckt, das Design des Melders nicht störend, angeordnet.

Wie des Weiteren aus den Figuren hervorgeht, ist der Designring 10 in Art einer Bajonettbefestigung wiederlösbar am Gehäuseoberteil 1b festlegbar. Zu diesem Zweck sind vier hakenförmig ausgebildete Befestigungselemente 10a an den Designring 10 angeformt, die mit entsprechend ausgeführten, am Gehäuseoberteil 1b vorhandenen Befestigungselementen bajonettartig zusammenwirken. Bei Bedarf kann der Designring 10 mit einem zum Beispiel ringartig ausgeführten Dichtelement 11 versehen sein.

Die im Gehäuse untergebrachte Leiterplattenanordnung 2 besteht beim vorliegenden Ausführungsbeispiel aus einer, mit mehreren zur Funktion notwendigen Bauteilen 8 bestückten, Hauptleiterplatte 2a und einer, mit den drei ersten Sensorelementen 3 der Sensoranordnung und dem zweiten Sensorelement 4 der Sensoreinrichtung bestückten Sensorleiterplatte 2b. Zudem ist die Sensorleiterplatte 2b mit weiteren, zur Funktion notwendigen Bauteilen 8 bestückt. Die Sensoranordnung mit ihren drei ersten Sensorelementen 3 ist dafür vorgesehen, die Präsenz und/oder Bewegung von sich im Erfassungsbereich aufhaltenden Personen aufgrund von Infrarotstrahlung sicher zu erkennen. Die Sensoreinrichtung mit ihrem zweiten Sensorelement 4 ist dafür vorgesehen, die Umgebungshelligkeit zu erfassen, das heißt, die in der Umgebung vorliegende Lichtintensität zu ermitteln. Durch den auf der Hauptleiterplatte 2a befindlichen Microcontroller 7 erfolgt eine Auswertung der mit Hilfe der Sensoranordnung und der Sensoreinrichtung ermittelten Messgrößen. Aufgrund dieser Messgrößen werden dann angeschlossene - der Einfachheit halber nicht dargestellte - Aktoren beziehungsweise Verbraucher, wie zum Beispiel eine zugeordnete Beleuchtungseinrichtung, Jalousien, Gebäudeheizung und so weiter bedarfsgerecht beeinflusst. Zur gemeinsamen Halterung und exakten Ausrichtung, auch hinsichtlich der am Gehäuseoberteil 1b vorhandenen Linsenkappe 9, ist ein Halter 13 vorgesehen, welcher an der Sensorleiterplatte 2b festgelegt ist. Der Halter 13 ist dabei derart ausgebildet, dass sowohl die drei ersten Sensorelemente 3, als auch das zweite Sensorelement 4 gemeinschaftlich aufgenommen werden. Dem zweiten Sensorelement 4 ist einerseits ein im Halter 13 befindlicher Lichtleiter 14 zugeordnet, welcher andererseits in Richtung Innenseite der Linsenkappe 9 geführt ist. Im Bereich des andererseits zugeordneten Lichtleiters 14 weist die Linsenkappe 9 eine optische Ausbildung OA auf, die hinsichtlich der Erfassung der Helligkeit von Umgebungslicht besonders geeignet ausgeführt ist. Die optische Ausbildung OA ist als möglichst klar transparentes, in der Materialdicke reduziertes Fenster ausgeführt. Das Fenster (optische Ausbildung OA) ist so angeordnet, dass es, die Erfassung von Infrarotstrahlung möglichst nicht behindernd, zwischen zwei Linsensegmenten der Linsenkappe 9 angeordnet ist. Jedes der beiden Linsensegmente ist in seiner Ausprägung lediglich um ein Drittel reduziert, um eine gute Erfassung der Helligkeit von Umgebungslicht zu ermöglichen. Damit das zweite Sensorelement 4 nur mit besonders wenig Streulicht beaufschlagt wird, ist der knapp unter der Innenseite der Linsenkappe 9 endende Lichtleiter 14 in einem schornsteinartigen Gebilde 13a des Halters 13 angeordnet, welcher bis an die Innenseite der Linsenkappe 9 herangeführt ist. Die Sensoreinrichtung mit ihrem zweiten Sensorelement 4 ermöglicht somit ein helligkeitsabhängiges Schalten, bei dem Störgrößen weitestgehend ausgefiltert sind. Mit einer derartigen Ausbildung ist es also möglich, das Umgebungslicht bestimmter Bereiche, wie zum Beispiel vorhanden an einem Arbeitsplatz, einem Schreibtisch, einem Ausstellungsgegenstand und so weiter zu erfassen und weitgehend störungsfrei für eine bedarfsgerechte Beeinflussung von angeschlossenen Aktoren auszunutzen.

Optional kann eine - der Einfachheit halber nicht dargestellte - Blende zum Einsatz kommen, um die Erfassung von Infrarotstrahlung bedarfsgerecht auf einen Erfassungsbereich oder mehrere Erfassungsbereiche einzuschränken.

Um dem Benutzer auf komfortable Art und Weise eine Möglichkeit zu bieten, am Melder individuelle Einstellungen von Beeinflussungsparametern, insbesondere einer Empfindlichkeitseinstellung für Infrarotstrahlung und eine Inbetriebnahme als Busgerät in einem Gebäudeinstallationssystem, vornehmen zu können, weist die Leiterplattenanordnung eine erste Stelleinrichtung 5 und eine zweite Stelleinrichtung 6 auf. Die erste Stelleinrichtung 5 steht einerseits mit einem ersten Betätigungselement 5a in Wirkverbindung, welches als Schalthebel ausgeführt ist und ist andererseits zur Betätigung aus dem Gehäuseoberteil 1b nach außen geführt. Die erste Stelleinrichtung 5 ist auf der Hauptleiterplatte 2a angeordnet, als Schiebeschalter ausgeführt und zur Beeinflussung der Empfindlichkeit gegenüber Infrarotstrahlung vorgesehen. Die zweite Stelleinrichtung 6 steht einerseits mit einem zweiten Betätigungselement 6a in Wirkverbindung, welches als Taststößel ausgeführt ist und ist andererseits zur Betätigung aus dem Gehäuseoberteil 1b nach außen geführt. Die zweite Stelleinrichtung 6 ist ebenfalls auf der Hauptleiterplatte 2a angeordnet, als Tastschalter ausgeführt und für die Inbetriebnahme als Busgerät in einem Gebäudeinstallationssystem vorgesehen. Wurde der Designring 10 vom Gehäuseoberteil 1b entfernt, sind die beiden Betätigungselemente 5a, 6a für den Benutzer besonders komfortabel erreichbar und können von diesem auch auf besonders einfache Art und Weise bedient beziehungsweise eingestellt werden. Nachdem der Benutzer die individuellen Einstellungen vorgenommen hat, kann dieser auf einfache Art und Weise den Designring 10 wieder bajonettartig am Gehäuseoberteil 1b befestigen, so dass die beiden Betätigungselemente 5a, 6a formschön, das Design des Melders nicht störend, verdeckt angeordnet sind. Die Linsenkappe 9 ist zudem einstückig mit mehreren Linsensegmenten versehen, die besonders geeignet sind, Infrarotstrahlung zu erfassen und gebündelt auf die drei ersten Sensorelemente 3 der Sensoranordnung weiterzuleiten. Die Linsenkappe 9 ist einteilig mit dem Gehäuseoberteil 1b ausgeführt. Zum Anschluss von elektrischen Leitungen ist am Gehäuseunterteil 1a eine mit der Leiterplattenanordnung elektrisch leitend in Verbindung stehende Anschlussanordnung 17 vorhanden. Beim vorliegenden Ausführungsbeispiel besteht die Anschlussanordnung 17 aus zwei mit Federklemmen ausgerüsteten Klemmblöcken. Es ist eine, mehrere Steckerstifte 19 aufweisende elektrische Verbinderanordnung 18 vorgesehen, welche eine elektrisch leitende Verbindung zwischen der Hauptleiterplatte 2a und der Sensorleiterplatte 2b schafft. Auf der Hauptleiterplatte 2a sind zwei weitere Steckerstifte 19 angeordnet, die elektrisch leitend mit den Federkiemmen der Anschiussanordnung 17 in Verbindung treten. Die elektrisch leitende Verbindung der Steckerstifte der Verbindungsanordnung 18 mit der Hauptleiterplatte 2a erfolgt durch einen auf der Hauptleiterplatte 2a festgelegten Kontaktblock.

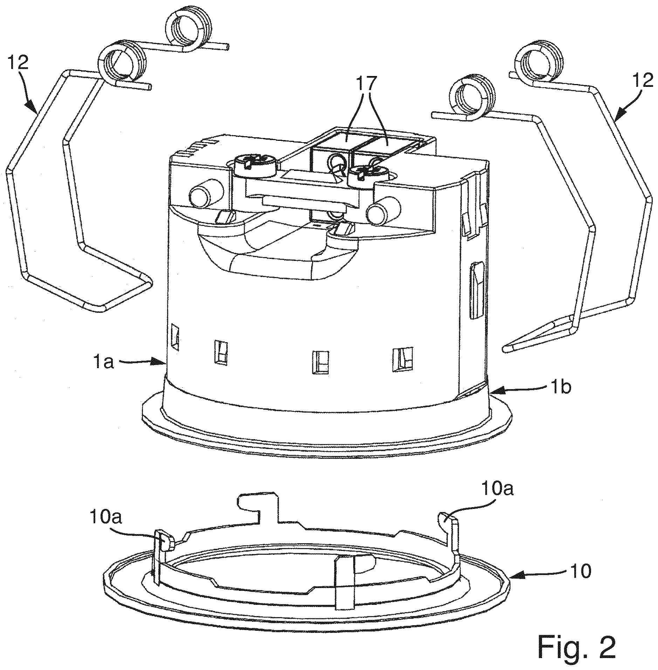

Wie insbesondere aus Figur 2 hervorgeht, ist der dort abgebildete Melder gemäß einem ersten Ausführungsbeispiel zur direkten Montage in eine - der Einfachheit halber nicht dargestellte - Zwischendecke vorgesehen. Zu diesem Zweck sind am Gehäuseunterteil 1a zwei Federbügel 12 angebracht, die automatisch für eine bedarfsgerechte Festlegung des Melders in der Zwischendecke Sorge tragen. Zur Festlegung des Melders kann insbesondere eine kreisförmige Ausnehmung in der Zwischendecke vorgesehen sein.

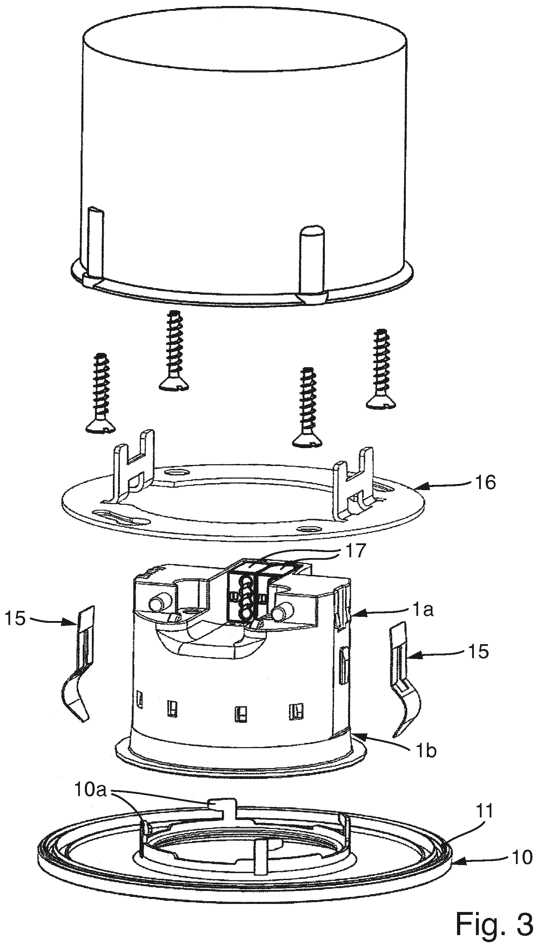

Wie insbesondere aus Figur 3 hervorgeht, ist der dort abgebildete Melder gemäß zweitem Ausführungsbeispiel zur Montage in eine Installationsdose vorgesehen. Derartige Installationsdosen können zum Beispiel als Unterputzdose, als Hohlwanddose oder als Aufputzdose ausgeführt sein. Zum Zweck der Montage in eine Installationsdose sind am Gehäuseunterteil 1a zwei Federlaschen 15 angebracht. Zudem ist ein an den Installationsdosen zu befestigender Montagering 16 vorgesehen, welcher vor der Montage des Melders an den Installationsdosen festzulegen ist. Die beiden Federlascheri 15 kommen bei der Montage mit entsprechend ausgeführten Befestigungskanten des Montageringes 16 in Wirkverbindung, so dass für eine bedarfsgerechte Festlegung des Melders in der zugehörigen Installationsdose Sorge getragen ist.

Es ist somit ein Melder realisiert, welcher bei einfachem und kostengünstigem Aufbau mit hoher Funktionszuverlässigkeit einen vergleichsweise großen Erfassungsbereich zur Verfügung stellt. Zudem weist der Melder mit Stelleinrichtung 5,6 in Wirkverbindung stehende Betätigungselemente 5a, 6a auf, die sich durch den Benutzer auf besonders einfache Art und Weise bedienen lassen, um individuelle Einstellungen vornehmen zu können. Der bajonettartig am Gehäuseoberteil 1b-befestigte Designring 10 sorgt letztendlich für einen formschönen Abschluss des Melders, so dass die Betätigungselemente 5a, 6a, das Design des Melders nicht störend, verdeckt angeordnet sind.

### Bezugszeichenliste:

- 1a: Gehäuseunterteil
- 1b: Gehäuseoberteil
- 2a: Hauptleiterplatte
- 2b: Sensorleiterplatte
- 3: Erste Sensorelemente
- 4: Zweite Sensorelemente
- 5: Erste Stelleinrichtung
- 5a: Erstes Betätigungselement
- 6: Zweite Stelleinrichtung
- 6a: Zweites Betätigungselement
- 7: Microcontroller
- 8: Bauteile
- 9: Linsenkappe
- 10: Designring
- 10a: Hakenförmige Befestigungselemente
- 11: Dichtelement
- 12: Federbügel
- 13: Halter
- 13a: Schornsteinartiges Gebilde
- 14: Lichtleiter
- 15: Federlasche
- 16: Montagering
- 17: Anschlussanordnung
- 18: Verbindungsanordnung
- 19: Weitere Steckerstifte

- OA: Optische Ausrichtung

## Patentansprüche

1. Melder zur Erkennung der Präsenz und/oder Bewegung von sich im Erfassungsbereich aufhaltenden Personen mit einem Gehäuse, wobei das Gehäuse aus einem Gehäuseunterteil (1a) und einem Gehäuseoberteil (1b) besteht, welches Gehäuse zur Aufnahme einer Leiterplattenanordnung vorgesehen ist, wobei die Leiterplattenanordnung aus einer mit mehreren zur Funktion notwendigen Bauteilen (8) und mit zumindest einem Mikrokontroller (7) bestückten Hauptleiterplatte (2a), auf der eine erste Stelleinrichtung (5) und eine zweite Stelleinrichtung (6) angeordnet sind, und einer Sensorleiterplatte (2b) besteht, die mit einer ersten Sensorelementanordnung (3) zur Erfassung von Infrarotstrahlung und mit zumindest einem zweiten Sensorelement (4) zur Erfassung der Umgebungshelligkeit bestückt ist, wobei die erste Stelleinrichtung (5) mit einem ersten Bestätigungselement (5a) in Wirkverbindung steht und die zweite Stelleinrichtung (6) mit einem zweiten Betätigungselement (6a) in Wirkverbindung steht, **dadurch gekennzeichnet, dass** das erste und das zweite Stellelement zur Betätigung aus dem Gehäuseoberteil (1b) nach außen geführt sind, welches erste Betätigungselement (5a) als Schalthebel und welches zweite Betätigungselement (6a) als Taststößel ausgeführt ist, wobei der Zugang zu den Betätigungselementen (5a, 6a) für den Benutzer durch einen wiederlösbar am Gehäuseoberteil (1b) festlegbaren Designring (10) abgedeckt ist und die erste Sensorelementanordnung (3) aus mehreren ersten Sensorelementen (3) besteht und am Gehäuse eine mit dem Gehäuseoberteil einstückig verbundene mehrere Linsensegmente aufweisende Linsenkappe (9) vorhanden ist.

2. Melder nach Anspruch 1, **dadurch gekennzeichnet, dass** der Designring (10) in Art einer Bajonettbefestigung wiederlösbar am Gehäuseoberteil (1b) festlegbar ist.

3. Melder nach einem der Ansprüche 1 oder 2, **dadurch gekennzeichnet, dass** der Designring (10) mit zumindest einem Dichtelement (11) versehen ist.

4. Melder nach einem der Ansprüche 1 bis 3, **dadurch gekennzeichnet, dass** zumindest eine Stelleinrichtung (5,6) zur Beeinflussung der Einschaltdauer und/oder Nachlaufzeit angeschlossener Aktoren vorgesehen ist.

5. Melder nach einem der Ansprüche 1 bis 4, **dadurch gekennzeichnet, dass** zumindest eine Stelleinrichtung (5,6) zur Beeinflussung einer bevorzugten Betriebsart vorgesehen ist.

6. Melder nach einem der Ansprüche 1 bis 5, **dadurch gekennzeichnet, dass** zumindest eine Stelleinrichtung (5,6) zur Beeinflussung der Empfindlichkeit hinsichtlich der Erfassung von Infrarotstrahlung vorgesehen ist.

7. Melder nach einem der Ansprüche 1 bis 6, **dadurch gekennzeichnet, dass** zumindest eine Stelleinrichtung (5,6) zur Inbetriebnahme als Busgerät in ein Gebäudeinstallationssystem vorgesehen ist.

8. Melder nach einem der Ansprüche 1 bis 7, **dadurch gekennzeichnet, dass** am Gehäuseunterteil (1a) zumindest ein, für eine Zwischendeckenmontage vorgesehener Federbügel (12) angebracht ist.

9. Melder nach einem der Ansprüche 1 bis 8, **dadurch gekennzeichnet, dass** am Gehäuseunterteil (1a) zumindest eine, für die Montage in einer Installationsdose vorgesehene Federlasche (15) angebracht ist.

10. Melder nach einem der Ansprüche 1 bis 9, **dadurch gekennzeichnet, dass** am Gehäuseunterteil (1a) zumindest eine einerseits mit einer Leiterplattenanordnung elektrisch leitend in Verbindung stehende, andererseits zum Anschluss von elektrischen Leitungen vorgesehene Anschlussanordnung (17) vorhanden ist.

11. Melder nach einem der Ansprüche 1 bis 10, **dadurch gekennzeichnet, dass** an der Leiterplattenanordnung zur Halterung der ersten Sensorelemente (3) der Sensoranordnung und zur Halterung des zweiten Sensorelementes (4) der Sensoreinrichturig ein Halter (13) festgelegt ist.

12. Melder nach einem der Ansprüche 1 bis 11, **dadurch gekennzeichnet, dass** die Leiterplattenanordnung (2) mit einer elektrischen Verbindungsanordnung (18) versehen ist.

## Claims

1. Detector for detection of presence and/or motion of persons in the detection range with a housing, wherein the housing consists of a lower part (1a) and an upper part (1b), this housing being provided to take up a PCB arrangement, wherein the PCB arrangement consists of a main PCB (2a) equipped with several components (8) necessary for the function and with at least one micro-controller (7), on this main PCB a first adjusting unit (5) and a second adjusting unit (6) are arranged, furthermore the PCB arrangement consists of a sensor PCB (2b) being equipped with a first sensor element arrangement (3) for detection of infrared radiation and with at least one second sensor element (4) for detection of the ambient brightness, wherein the first adjusting unit (5) is in operative connection with a first operating element (5a) and the second adjusting unit (6) is in operative connection with a second operating element (6a), **characterized by the fact** that for operation the first and the second adjusting element are lead out of the upper part of the housing (1b) to the outside, the first operating element (5a) being designed as switching lever and the second operating element (6a) being designed as sensory tappet, wherein the access to the operating elements (5a, 6a) is covered for the user by a design ring (10) fastened easily removably at the upper part of the housing (1b) and the first sensor element arrangement (3) consists of several first sensor elements (3) and at the housing a lens cap (9) is provided which is moulded to the upper part of the housing in one piece and which provides several lens elements.

2. Detector in accordance with Claim 1, **characterized by the fact** that the design ring (10) is to be fastened easily removably at the upper part of the housing (1b) as kind of bayonet fastening.

3. Detector in accordance with any of Claims 1 or 2, **characterized by the fact** that the design ring (10) is provided with at least one sealing element (11).

4. Detector in accordance with any of Claims 1 to 3, **characterized by the fact** that at least one adjusting unit (5,6) is provided to influence the switch-on period and/or follow-up time of connected actuators.

5. Detector in accordance with any of Claims 1 to 4, **characterized by the fact** that at least one adjusting unit (5,6) is provided to influence a preferred operating mode.

6. Detector in accordance with any of Claims 1 to 5, **characterized by the fact** that at least one adjusting unit (5,6) is provided to influence the sensitivity to the detection of infrared radiation.

7. Detector in accordance with any of Claims 1 to 6, **characterized by the fact** that at least one adjusting unit (5,6) is provided for commissioning as bus device in a building installation system.

8. Detector in accordance with any of Claims 1 to 7, **characterized by the fact** that at the lower part of the housing (1a) at least one spring bracket (12) is provided for mounting in a false ceiling.

9. Detector in accordance with any of Claims 1 to 8, **characterized by the fact** that at the lower part of the housing (1a) at least one spring flap (15) is provided for mounting in an installation box.

10. Detector in accordance with any of Claims 1 to 9, **characterized by the fact** that at the lower part of the housing (1a) at least one port assembly (17) is provided which on the one hand is connected with a PCB arrangement to conduct electricity, on the other hand is intended for the connection of electric leads.

11. Detector in accordance with any of Claims 1 to 10, **characterized by the fact** that at the PCB arrangement a support (13) is fastened to retain the first sensor elements (3) of the sensor arrangement and to retain the second sensor element (4) of the sensor arrangement.

12. Detector in accordance with any of Claims 1 to 11, **characterized by the fact** that the PCB arrangement (2) is provided with an arrangement of electric connections (18).

## Revendications

1. Détecteur de présence et/ou de mouvement de personnes se tenant dans la zone de détection, comportant un boîtier, ce boîtier se composant d'une partie inférieure du boîtier (1a) et d'une partie supérieure du boîtier (1b) et étant destiné à accueillir un système de cartes à circuits imprimés, le système de cartes à circuits imprimés se composant d'une carte à circuits imprimés principale (2a) équipée de plusieurs éléments (8) nécessaires au fonctionnement et d'au moins un microcontrôleur (7), sur laquelle sont placés un premier dispositif de réglage (5) et un deuxième dispositif de réglage (6), et d'une carte à circuits imprimés à capteurs (2b), équipée d'un premier système d'éléments capteurs (3) destiné à la détection de rayons infrarouges et d'au moins un second élément capteur (4) destiné à la détection de la luminosité ambiante, le premier dispositif de réglage (5) agissant en commun avec un premier élément d'actionnement (5a) et le deuxième dispositif de réglage (6) agissant en commun avec un deuxième élément d'actionnement (6a), **caractérisé en ce que** le premier et le deuxième élément de réglage sortent de la partie supérieure du boîtier (1b) pour permettre l'actionnement, ce premier élément d'actionnement (5a) étant réalisé sous forme de levier de commutation et ce deuxième élément d'actionnement (6a) étant réalisé sous forme de tige-poussoir, l'accès aux éléments d'actionnement (5a, 6a) pour l'utilisateur étant recouvert d'un anneau design (10) pouvant être fixé de manière détachable sur la partie supérieure du boîtier (1b), et le premier système d'éléments capteurs (3) se composant de plusieurs premiers éléments capteurs (3), et un capuchon à lentilles (9) présentant plusieurs segments de lentilles, relié en une pièce à la partie supérieure du boîtier, étant présent sur la partie supérieure du boîtier.

2. Détecteur selon la revendication 1, **caractérisé en ce que** l'anneau design (10) peut être fixé de manière détachable sur la partie supérieure du boîtier (1b) par une fixation de type baïonnette.

3. Détecteur selon l'une des revendications 1 ou 2, **caractérisé en ce que** l'anneau design (10) est muni d'au moins un élément d'étanchéité (11).

4. Détecteur selon l'une des revendications 1 à 3, **caractérisé en ce que** au moins un dispositif de réglage (5,6) est prévu pour influencer la durée d'activité et/ou d'inertie d'acteurs raccordés.

5. Détecteur selon l'une des revendications 1 à 4, **caractérisé en ce que** au moins un dispositif de réglage (5,6) est prévu pour influencer un mode de service privilégié.

6. Détecteur selon l'une des revendications 1 à 5, **caractérisé en ce que** au moins un dispositif de réglage (5,6) est prévu pour influencer la sensibilité du point de vue de la détection de rayons infrarouges.

7. Détecteur selon l'une des revendications 1 à 6, **caractérisé en ce que** au moins un dispositif de réglage (5,6) est prévu pour la mise en service sous forme d'appareil bus dans un système d'installation en bâtiment ou d'installation domotique.

8. Détecteur selon l'une des revendications 1 à 7, **caractérisé en ce que** au moins un étrier ressort (12) prévu pour un montage dans un faux-plafond est monté sur la partie inférieure du boîtier (1a).

9. Détecteur selon l'une des revendications 1 à 8, **caractérisé en ce que** au moins une bride ressort (15) prévue pour un montage dans une boîte d'installation est montée sur la partie inférieure du boîtier (1a).

10. Détecteur selon l'une des revendications 1 à 9, **caractérisé en ce que** la partie inférieure du boîtier (1a) présente au moins un système de raccordement (17) d'une part relié à un système de cartes à circuits imprimés de telle sorte qu'il y a passage de courant, d'autre part prévu pour le raccordement de lignes électriques.

11. Détecteur selon l'une des revendications 1 à 10, **caractérisé en ce que** un support (13) est fixé au système de cartes à circuits imprimés pour le maintien des premiers éléments capteurs (3) du système d'éléments capteurs et pour le maintien du deuxième élément capteur (4) du dispositif de capteurs.

12. Détecteur selon l'une des revendications 1 à 11, **caractérisé en ce que** le système de cartes à circuits imprimés (2) est muni d'un système de connexion électrique (18).
